Europäisches Patentamt

European Patent Office

Office européen des brevets

(11) Veröffentlichungsnummer: **0 347 872**
**B1**

(12) **EUROPÄISCHE PATENTSCHRIFT**

(45) Veröffentlichungstag der Patentschrift: **16.01.91**

(21) Anmeldenummer: **89111272.4**

(22) Anmeldetag: **21.06.89**

(51) Int. Cl.⁵: **F 15 B 1/06, F 15 B 21/04, B 01 D 35/02, B 01 D 36/00**

(54) Lüftungseinrichtung für einen vorzugsweise aus Kunststoff gefertigten Öltank.

(30) Priorität: **24.06.88 DE 3821331**

(43) Veröffentlichungstag der Anmeldung:
**27.12.89 Patentblatt 89/52**

(45) Bekanntmachung des Hinweises auf die
Patenterteilung:
**16.01.91 Patentblatt 91/03**

(84) Benannte Vertragsstaaten:
**FR GB IT NL**

(56) Entgegenhaltungen:
**DE-A-2 235 246**
**DE-B-1 941 153**
**US-A-3 288 289**

(73) Patentinhaber: **ARGO G.M.B.H. für Feinmechanik**
**D-7527 Kraichtal-Menzingen (DE)**

(72) Erfinder: **Bernhard, Hermann**
**Holbinsenstrasse 2**
**D-6921 Angelbachtal (DE)**

(74) Vertreter: **Griessbach, Dieter, Dr.**
**Höger, Stellrecht + Partner Uhlandstrasse 14 c**
**D-7000 Stuttgart 1 (DE)**

Courier Press, Leamington Spa, England.

# Beschreibung

Die Erfindung betrifft eine Lüftungseinrichtung an einem vorzugsweise aus Kunststoff gefertigten Öltank mit einem an einer Tanköffnung befestigten Ölrücklauffilter, wobei das Ölrücklauffilter im Bereich der Tanköffnung eine mit der äußeren Atmosphäre verbundene Expansionskammer hat und der Expansionskammer zum Tankinnern hin ein ringförmiger Ölrückhalteraum vorgeschaltet ist.

Ein Ölrücklauffilter mit Expansionskammer ist aus der DE—B—1941 153 bekannt. In der Praxis wurde die Expansionskammer dieses Filters dadurch weiterhin verbessert, daß ihr ein Ölrückhalteraum vorgeschaltet wurde, der zwischen der Filteraußenwand und der Innenwand einer zusätzlichen, das Filter umgebenden Hülse angeordnet war. Hierdurch wird in zuverlässiger Weise erreicht, daß bei der Entlüftung des Filters mitgerissenes Öl im Rückhalteraum und in der Expansionskammer zurückgehalten wird und nicht ins Freie gelangt.

Der Erfindung liegt die Aufgabe zugrunde, eine gattungsgemäße Lüftungseinrichtung gegenüber dem bekannten Stand der Technik zu vereinfachen und sie insbesondere an einen aus Kunststoff gefertigten Öltank anzupassen.

Die Aufgabe wird erfindungsgemäß dadurch gelöst, daß an der Tanköffnung fest ein Tankstutzen in Gestalt einer Zylinderhülse vorgesehen ist, deren äußerer Bereich zusammen mit einem Gehäuse des Filters die Expansionskammer bildet, daß der Ölrückhalteraum zwischen einer äußeren Wand des Ölrücklauffilters und der Innenwand des Tankstutzens ausgebildet ist, daß der Tankstutzen an seinem dem Tankinnern zugekehrten Ende eine einwärts zum Ölrücklauffilter hin gerichtete Lippe aufweist, die den Örückhalteraum vom Tankinnern trennt, und daß eine oder mehrere kleine Durchtrittsöffnungen für den Durchtritt von Luft aus dem Tankinnern in den Ölrückhalteraum vorgesehen sind.

Durch die erfindungsgemäße Ausbildung und Anordnung wird erreicht, daß ein Teil des Tankstutzens selbst für die Begrenzung der Expansionskammer und des Ölrückhalteraums ausgenutzt wird, wobei dieser Teil ständig am Tank verbleibt. Die übrigen Begrenzungen von Expansionskammer und Ölrückhalteraum sind in einfacher Weise am Ölrücklauffilter selbst ausgebildet.

Die nachstehende Beschreibung einer bevorzugten Ausführungsform der Erfindung dient im Zusammenhang mit beiliegender Zeichnung der weiteren Erläuterung. Es zeigen:

Figur 1 schematisch in Ansicht ein Ölrücklauffilter mit Be- und Entlüftungseinrichtung;

Figur 2 eine Draufsicht des Filters aus Fig. 1;

Figur 3 im Schnitt eine Verdrehsicherung für einen Filterdeckel und

Figur 4 Teilschnittansichten von Öffnungen bis 7 für den Durchtritt von Luft aus einem Tank in einen Ölrückhalteraum.

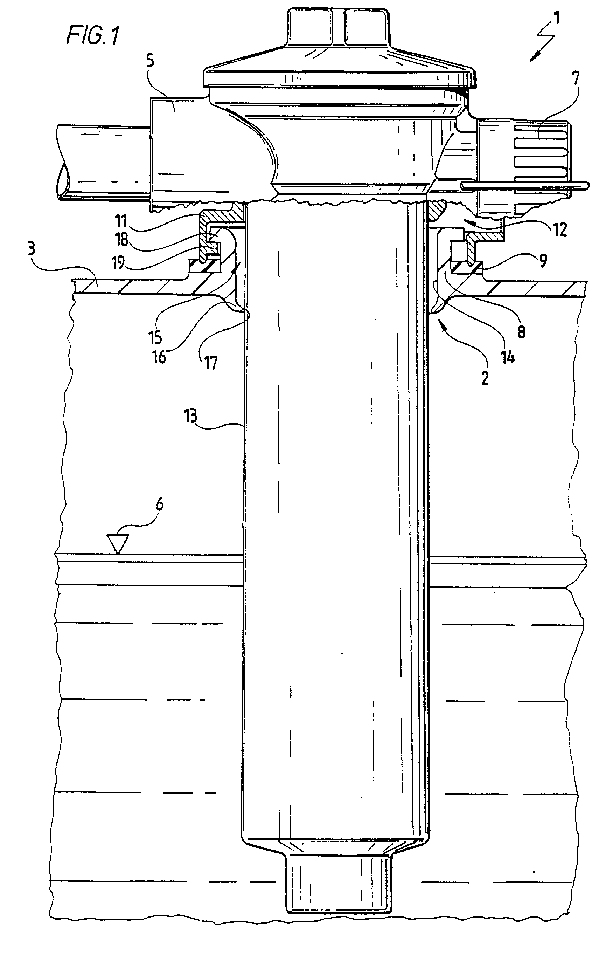

In Figur 1 ist ein Ölrücklauffilter 1 an der Tanköffnung 2 eines Öltanks 3 angeordnet. Der Tank 3 besteht vorzugsweise aus Kunststoff und wird im Schleuderverfahren hergestellt. Grundsätzlich kann der Tank 3 jedoch auch aus Metall bestehen. Der Ölrücklauffilter 1 umfaßt in bekannter Weise einen Ölrücklaufstutzen 5 über den Öl nach entsprechender Filterung in den Tank 3 zurückströmt. Der Ölspiegel im Tank ist mit der Pfeilspitze 6 bezeichnet. Beim Zurückströmen von Öl in den Tank 3 entweicht die verdrängte Luft über ein an sich bekanntes Luftfilter 7 am Ölrücklauffilter 1. Bei der Entnahme von Öl aus dem Tank 3 strömt durch dieses Filter 7 Luft nach.

Um zu verhindern, daß beim Entlüften durch die ausströmende Luft Öl aus dem Tankinnern nach außen mitgerissen wird, sind bei dem dargestellten Ölrücklauffilter und dem Tank folgende Vorkehrungen getroffen: an der Tanköffnung ist fest, vorzugsweise einstückig, ein Tankstutzen 8 in Gestalt einer Zylinderhülse vorgesehen. Der Tankstutzen 8 wird unter Zwischenschaltung einer Dichtung 9 von einem äußeren Gehäuse 11 des Ölrücklauffilters 1 derart überfangen, daß sich im äußeren Bereich des Stutzens eine Expansionskammer 12 bildet, aus welcher aus dem Tankinnern eingeströmte Luft über das Filter 7 nach außen expandieren kann. Die Expansionskammer weist in an sich bekannter Weise Prallflächen auf, von denen mitgerissenes Öl zurückgehalten wird. Derartige Prallflächen sind an sich bekannt, so daß sie hier im einzelnen nicht beschrieben zu werden brauchen.

Zwischen einer äußeren Wand 13 des Filters 1 und der Innenwand 14 des hülsenförmigen Tankstutzens 8 ist ein ringförmiger Ölrückhalteraum 15 ausgebildet, welcher der Expansionskammer 12 strömungsmäßig vorgeschaltet ist. An seinem dem Tankinnern zugekehrten Ende weist der Tankstutzen 8 eine ringförmig nach einwärts zur Wand 13 des Ölrücklauffilters 1 hin gerichtete Lippe 16 auf, die den Ölrückhalteraum 15 vom Tankinnern trennt. Bei der in Figur 1 dargestellten Ausführungsform liegt die Lippe 16 nicht an der Wand 13 des Filters an. Es verbleibt also Durchtrittsöffnung für Luft ein kleiner ringförmiger Spalt 17 zwischen Lippe 16 und Wand 13. Beim kräftigen Ausströmen von Luft aus dem Tankinnern in den Ölrückhalteraum wird bereits aufgrund dieses kleinen Spaltes mitgerissenes Öl abgewiesen. Ein Teil des Öles, welches diesen Spalt 17 dennoch passiert hat, wird im Ölrückhalteraum 15 abgesetzt. Ein etwa noch verbleibender Ölrest wird in der Expansionskammer 12 ausgeschieden.

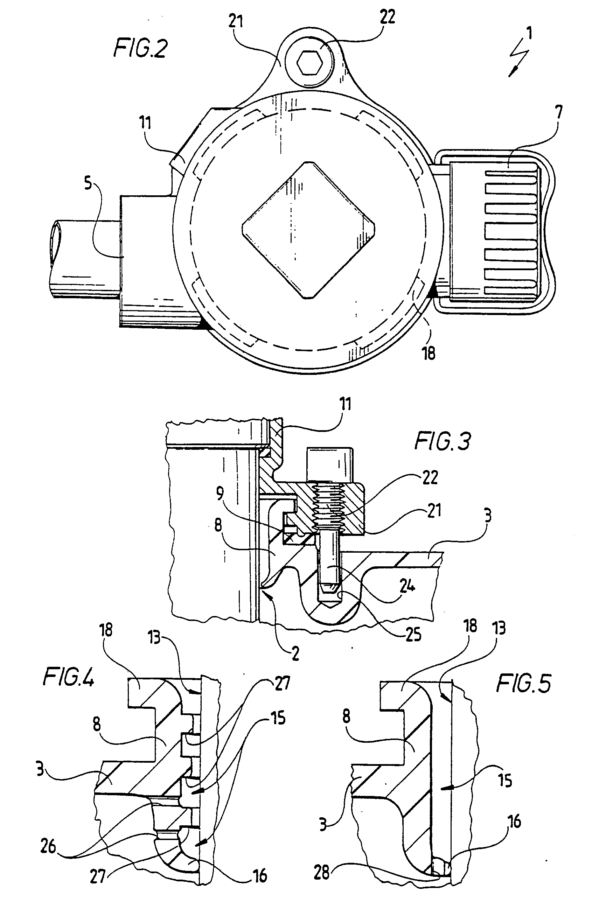

Wie aus Figur 1 und 2 ersichtlich, wird das Gehäuse 11 des Filters 1 durch Bajonettverschluß mit dem Tankstutzen 8 verbunden. Hierzu weist der Tankstutzen 8 an seinem äußeren Ende in Winkelabständen von 90° vier nach auswärts gerichtete Lappen 18 auf, die in bekannter Weise mit entsprechenden, am Gehäuse 11 nach einwärts abstehenden Lappen 19 zusammenwirken. Der Ölrücklauffilter 1 wird mit dem Gehäuse 11 unter Aufpressen auf die Dichtung so eingesetzt, daß die Lappen 19 zunächst im Zwischenraum zwischen den Lappen 18 liegen. Anschließend wird das Filter 1 um 90° verdreht, wobei die Lappen 19 die Lappen 18 untergreifen und das Filter 1 durch den so vermittelten Bajonettverschluß sicher am Tank 3 gehalten ist.

Wie die Figuren 2 und 3 zeigen, ist in einem seitlichen Vorsprung 21 des Filtergehäuses 11 eine eindrehbare Schraube 22 angeordnet; deren nach unten gerichteter Schaft einen Sicherungsstift 24 bildet.

Nach Ausbildung des Bajonettverschlusses wird die Schraube 22 so weit eingedreht, daß der Sicherungsstift 24 in eine neben dem Tankstutzen 8 ausgebildete Ausnehmung 25 eingreift und hierdurch den Bajonettverschluß gegen Verdrehung sichert. Der Bajonettverschluß kann somit erst wieder geöffnet werden, wenn der Stift 24 aus der Ausnehmung 25 herausgedreht ist.

Die Figur 4 zeigt eine abgewandelte Ausführungsform des Tankstutzens 8. Die ringförmige Lippe 16 ragt so weit nach innen, daß sie an der Außenwand 13 des Filters anliegt. Um den Eintritt von Luft in den Ölrückhalteraum 15 zwischen Filteraußenwand 13 und Tankstutzen 8 zu ermöglichen, sind zwei kleine Durchtrittsöffnungen 26 unmittelbar am Tankstutzen 8 ausgebildet. Außerdem weist die Innenwand des Tankstutzens 8 nach einwärts zur Wand 13 des Filters hin gerichtete, ringförmige Vorsprünge auf, die Prallflächen 27 für mitgerissenes Öl darstellen.

Bei der Ausführungsform des Tanksutzens 8 nach Figur 5 liegt die Lippe 16 ebenfalls an der äußeren Wand 13 des Filters an. Hier sind eine oder mehrere Durchtrittsöffnungen 28 unmittelbar im Bereich der Lippe 16 ausgebildet.

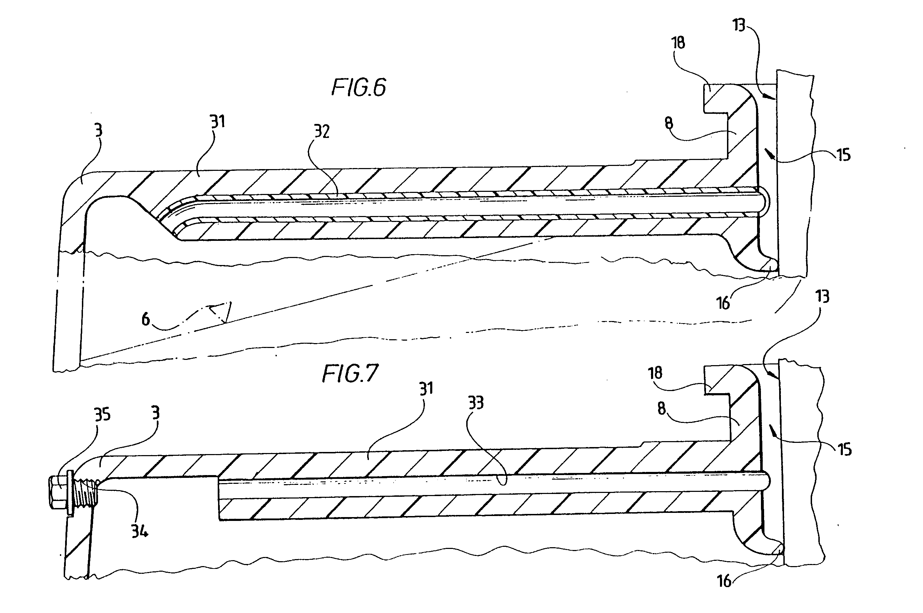

Bei der Ausführungsform nach Figur 6 ist in eine obere Wand 31 des Tanks 3, an welcher der Tankstutzen 8 ausgebildet ist, ein Rohr 32 (im Verlauf des Schleuderverfahrens) eingelassen, welches einerseits mit dem Ölrückhalteraum 15 und andererseits mit dem Tankinnern in Verbindung steht. Die Lippe 16 des Tankstutzens 8 liegt bei dieser Ausführungsform wiederum dicht an der Außenwand 13 des Filters an. Wenn der Ölspiegel 6 im Tank 3 die dargestellte Schräglage einnimmt, kann immer noch Luft über das Rohr 32 in den Ölrückhalteraum entweichen, ohne daß in diesen Raum direkt Öl eindringt.

Die Ausführungsform gemäß Figur 7 funktioniert in der gleichen Weise. Dort ist jedoch das Rohr durch eine Bohrung 33 in der entsprechend verdickten Wand 31 ersetzt, die nachträglich über eine zusätzliche Bohrung 34 mit einem entsprechend langen Bohrer hergestellt wird. Die Bohrung 34 wird anschließend mit einer Schraube 35 dicht verschlossen.

## Patentansprüche

1. Lüftungseinrichtung an einem vorzugsweise aus Kunststoff gefertigten Öltank (3) mit einem an einer Tanköffnung (2) befestigten Ölrücklauffilter (1), wobei das Ölrücklauffilter (1) im Bereich der Tanköffnung (2) eine mit der äußeren Atmosphäre verbundene Expansionskammer (12) hat und der Expansionskammer zum Tankinneren hin ein ringförmiger Ölrückhalteraum (15) vorgeschaltet ist, dadurch gekennzeichnet, daß an der Tanköffnung (2) fest ein Tankstutzen (8) in Gestalt einer Zylinderhülse vorgesehen ist, deren äußerer Bereich zusammen mit einem Gehäuse (11) des Filters (1) die Expansionskammer (12) bildet, daß der Ölrückhalteraum (15) zwischen einer äußeren Wand (13) des Ölrücklauffilters (1) und der Innenwand (14) des Tankstutzens (8) ausgebildet ist, daß der Tankstutzen (8) an seinem dem Tankinneren zugekehrten Ende eine einwärts zum Ölrücklauffilter hin gerichtete Lippe (16) aufweist, die den Ölrückhalteraum (15) vom Tankinnern trennt, und daß eine oder mehrere kleine Durchtrittsöffnungen (17, 26, 28, 32, 33) für den Durchtritt von Luft aus dem Tankinnern in den Ölrückhalteraum (15) vorgesehen sind.

2. Einrichtung nach Anspruch 1, dadurch gekennzeichnet, daß die Durchtrittsöffnung als Spalt (17) zwischen der Lippe (16) und der Außwand (13) des Ölrücklauffilters (1) ausgebildet ist.

3. Einrichtung nach Anspruch 1, dadurch gekennzeichnet, daß die Durchtrittsöffnungen als Durchbrechungen (28) der Lippe (16) ausgebildet sind.

4. Einrichtung nach Anspruch 1, dadurch gekennzeichnet, daß die Durchtrittsöffnungen als Durchbrechungen (26) des Tankstutzens (8) ausgebildet sind.

5. Einrichtung nach Anspruch 1, dadurch gekennzeichnet, daß wenigstens eine der Durchtrittsöffnungen als ein Kanal (32, 33) ausgebildet ist, der einerseits durch den Tankstutzen (8) hindurch in den Ölrückhalteraum (15) und andererseits in solchem Abstand vom Tankstutzen (8) an der dem Ölspiegel (6) gegenüberliegenden, oberen Innenwand (31) des Tanks (3) ausmündet, daß auch bei schrägstehendem Tank (3) ein Lufteintritt in den Ölrückhalteraum (15) gewährleistet ist.

6. Einrichtung nach Anspruch 1, dadurch gekennzeichnet, daß an der Innenwand (14) des Tankstutzens (8) im Bereich des Ölrückhalteraums (15) Prallflächen (27) ausgebildet sind.

7. Einrichtung nach Anspruch 1, dadurch gekennzeichnet, daß am Ölrücklauffilter (1) und am Tankstutzen (8) miteinander zusammenwirkende Teile (18, 19) eines Bajonettverschlusses angeordnet sind.

8. Einrichtung nach Anspruch 7, dadurch gekennzeichnet, daß als Verdrehsicherung für den Bajonettverschluß am Ölrücklauffilter (1) ein Sicherungsstift (24) lösbar angeordnet ist, der in eine vorgeformte Ausnehmung (25) des Öltanks (3) eingreift.

## Revendications

1. Dispositif d'aération sur un réservoir d'huile (3) fabriqué de préférence en matière plastique, avec un filtre d'huile de retour (1) fixé sur une ouverture (2) du réservoir, dans lequel le filtre d'huile de retour (1) a dans la région de l'ouverture (2) du réservoir une chambre d'expansion (12) reliée à l'atmosphère extérieure et la chambre d'expansion est disposée en amont, en direction de l'intérieur du réservoir, d'un compartiment de retenue d'huile (15) de forme annulaire, caractérisé en ce qu'il est prévu, fixé à l'ouverture (2) du réservoir, un collet de réservoir (8) ayant la configuration d'un manchon cylindrique dont la partie extérieure compose avec un boîtier (11) du filtre (1) la chambre d'expansion (12), en ce que le compartiment de retenue d'huile (15) est délimité entre une paroi extérieure (13) du filtre d'huile de retour (1) et la paroi intérieure (14) du collet de réservoir (8), en ce que le collet du réservoir (8) présente à son extrémité tournée vers l'intérieur du réservoir une lèvre (16) qui est dirigée vers l'intérieur en direction du filtre d'huile de retour et qui sépare le compartiment de retenue d'huile (15) de l'intérieur du réservoir, et en ce que sont prévues une ou plusieurs petites ouvertures de passage (17, 26, 28, 32, 33) pour le passage de l'air de l'intérieur du réservoir dans le compartiment de retenue d'huile (15).

2. Dispositif selon la revendication 1, caractérisé en ce que l'ouverture de passage est constituée par une fente (17) entre la lèvre (16) et la paroi extérieure (13) du filtre d'huile de retour (1).

3. Dispositif selon la revendication 1, caractérisé en ce que les ouvertures de passage sont constituées par des perforations (28) de la lèvre (16).

4. Dispositif selon la revendication 1, caractérisé en ce que les ouvertures de passage sont constituées par des perforations (26) du collet de réservoir (8).

5. Dispositif selon la revendication 1, caractérisé en ce qu'au moins l'une des ouvertures de passage est constituée par un canal (32, 33) qui s'ouvre d'une part en traversant le collet de réservoir (8) dans le compartiment de retenue d'huile (15) et, d'autre part dans la paroi intérieure supérieure (31 du réservoir (3) située à l'opposé du niveau de l'huile (6), à une distance du collet de réservoir (8) telle que, même lorsque le réservoir (3) est en position inclinée, l'entrée de l'air dans le compartiment de retenue d'huile (15) est assurée.

6. Dispositif selon la revendication 1, caractérisé en ce que des surfaces de chicane (27) sont prévues sur la paroi intérieure (14) du collet de réservoir (8) dans la région du compartiment de retenue d'huile (15).

7. Dispositif selon la revendication 1, caractérisé en ce que sont disposées sur le filtre d'huile de retour (1) et sur le collet de réservoir (8) les parties (18, 19) coopérant l'une avec l'autre d'une fermeture à baïonnette.

8. Dispositif selon la revendication 7, caractérisé en ce que, pour l'arrêt en rotation de la fermeture à baïonette, est prévue sur le filtre d'huile de retour (1), une goupille de sécurité (24) amovible qui s'engage dans un évidement préformé (25) du réservoir d'huile (3).

## Claims

1. A ventilation device, on an oil tank (3) which is preferably made of plastic, comprising a returned oil filter (1) fixed on a tank opening (2), wherein the returned oil filter (1) comprises, near the tank opening (2), an expansion chamber (12) connecting with the external atmosphere and an annular oil retaining chamber (15) is connected to the expansion chamber towards the interior of the tank, characterized in that a tank connecting piece (8) in the form of a cylindrical sleeve is permanently fixed at the tank opening (2) the outer region of which together with a housing (11) of the filter (1) forms the expansion chamber (12), the oil retaining chamber (15) is formed between an outer wall (13) of the returned oil filter (1) and the inner wall (14) of the tank connecting piece (8), the tank connecting piece (8) comprises, at its end towards the interior of the tank, a lip (16) directed inwards towards the returned oil filter which separates the oil retaining chamber (15) from the interior of the tank, and one or more small through holes (17, 26, 28, 32, 33) are provided for the passage of air from the interior of the tank into the oil retaining chamber (15).

2. A device according to Claim 1, characterized in that the through hole is formed as a slit (17) between the lip (16) and the outer wall (13) of the returned oil filter (1).

3. A device according to Claim 1, characterized in that the through holes are formed as holes (28) through the lip (16).

4. A device according to Claim 1, characterized in that the through holes are formed as holes (26) through the tank connecting piece (8).

5. A device according to Claim 1, characterized in that at least one of the through holes is formed as a channel (32, 33) which opens at one end, through the tank connecting piece (8), into the oil retaining chamber (15) and opens at the other end in the top inner wall (31) of the tank (3), which faces the oil level, at such a distance from the tank connecting piece (8) that even with an inclined tank (3) it is ensured that there is a passageway for entrance of air into the oil retaining chamber (15).

6. A device according to Claim 1, characterized in that baffles (27) are formed on the inner wall (14) of the tank connecting piece (8) near the oil retaining chamber (15).

7. A device according to Claim 1, characterized in that elements (18, 19) of a bayonet catch which cooperate with one another are located on the returned oil filter (1) and on the tank connecting piece (8).

8. A device according to Claim 7, characterized in that as the element of the bayonet catch on the returned oil filter (1) which prevents rotation, a locking bar (24) which engages in a preformed recess (25) in the oil tank (3) is releasably fitted.

FIG.1

FIG.2

FIG.3

FIG.4

FIG.5

*FIG.6*

*FIG.7*